**Europäisches Patentamt**

**European Patent Office**

**Office européen des brevets**

(11) Veröffentlichungsnummer: **0 464 382 A2**

(12) # EUROPÄISCHE PATENTANMELDUNG

(21) Anmeldenummer: **91109102.3**

(51) Int. Cl.5: **G11B 17/28**, G11B 33/10

(22) Anmeldetag: **04.06.91**

(30) Priorität: **05.06.90 DE 4018018**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **Schindler, Wolfgang**
**Wächterhofstrasse 50**
**W-8011 Höhenkirchen(DE)**

(72) Erfinder: **Schindler, Wolfgang**
**Wächterhofstrasse 50**
**W-8011 Höhenkirchen(DE)**
Erfinder: **Mitusch, Peer**
**Hauptstrasse 110**
**W-8014 Neubiberg(DE)**

(74) Vertreter: **Kern, Ralf M., Dipl.-Ing. et al**
**Postfach 14 03 29**
**W-8000 München 5(DE)**

(54) **CD-Plattengerät.**

(57) Die vorliegende Erfindunhg betrifft ein CD-Plattengerät zur Speicherung und Abtastung einer Vielzahl von CD-Platten, bestehend aus einem äußeren Gehäuse, einem Speichermagazin mit einer Mehrzahl von Aufnahmefächern, in welchen die CD-Platten einzeln einsetzbar sind, einer Abtasteinheit, in welcher die auf einer CD-Platte in digitaler Form aufgezeichnete Information unter Einsatz eines Laserstrahls abtastbar ist, sowie einer Transfereinheit, mit welcher die innerhalb eines bestimmten Aufnahmefaches des Speichermagazins befindliche CD-Platte der Abtasteinheit zuführbar ist. Um bei sehr kompakter Bauweise eine möglichst rasche Zugriffzeit zu erreichen, ist im Rahmen der vorliegenden Erfindung vorgesehen, daß bei stationärer Ausbildung des Speichermagazins (5) die Abtasteinheit (6) in Bezug auf das Speichermagazin (5) beweglich ausgebildet ist.

Fig.2

EP 0 464 382 A2

Die vorliegende Erfindung betrifft ein CD-Plattengerät zum Speichern und Abtasten einer Vielzahl von CD-Platten entsprechend dem Oberbegriff des Anspruchs 1.

In den letzten Jahren haben sich CD-Platten für die Wiedergabe von Musikstücken sehr stark auf dem Markt durchgesetzt, was dadurch bedingt ist, daß die Aufzeichnung der Musikinformation dabei auf digitaler Basis erfolgt, was dazu führt, daß selbst bei sehr häufigem Abspielen eine hohe Klangqualität ohne Störgeräusche gewährleistet bleibt.

Bei einer derartigen digitalen Aufzeichnung lassen sich sehr hohe Informationsdichten erzielen, so daß der Durchmesser von derartigen CD-Platten im Vergleich zu normalen Langspielplatten sehr klein gehalten werden kann. Die Kleinheit derartiger CD-Platten führt jedoch zwangsläufig dazu, daß das Suchen nach einer bestimmten CD-Platte sich vielfach als etwas aufwendig erweist, falls der Musikliebhaber eine relativ große Sammlung von CD-Platten besitzt.

Abgesehen von CD-Plattenwechslern, bei welchen jeweils fünf oder zehn CD-Platten gleichzeitig eingeschoben werden können, existiert heutzutage nur ein CD-Plattengerät, welches zwei nebeneinander angeordnete turmförmige Magazine für die Aufnahme von jweils 50 CD-Platten aufweist. Eine derartige Speicherkapazität erweist sich jedoch vielfach noch nicht als ausreichend, weil Musikliebhaber heutzutage bereits Plattensammlungen von einigen hundert CD-Platten besitzen.

Bei dem bekannten CD-Plattengerät erweist es sich fernerhin als nachteilig, daß ein Wechsel und ein nachträgliches Einführen einzelner CD-Platten nur dadurch erfolgen kann, indem jeweils ein ganzes turmartiges Magazin aus dem CD-Plattengerät entfernt wird, um dann manuell einen Austausch bzw. ein Einfügen neuer CD-Platten vornehmen zu können. Die einzelnen CD-Platten werden im übrigen bei dem bekannten Gerät durch zusätzliche quadratische Kunststoffplatten innerhalb des Magazins gehalten, wobei diese quadratischen Kunststoffplatten vor allem dazu dienen, daß ein störungsfreier Transfer der betreffenden CD-Platte zwischen dem Magazin und der Abspieleinheit durchgeführt werden kann.

Es ist demzufolge Aufgabe der vorliegenden Erfindung, das CD-Plattengerät der eingangs genannten Art dahingehend weiterzubilden, daß bei äußerst kompakter Bauweise eine sehr hohe Anzahl von CD-Platten einspeicherbar sind, wobei durch kurze Auslegung der Transportwege zwischen der jeweiligen Speicherstelle des Magazins und der Abtasteinheit sehr kurze Zugriffzeiten erzielbar sind.

Erfindungsgemäß wird dies durch Vorsehen der im kennzeichnenden Teil des Anspruchs 1 aufgeführten Merkmale erreicht.

Vorteilhafte Weiterbildungen der Erfindung ergeben sich anhand der Unteransprüche.

Das erfindungsgemäße CD-Plattengerät ist derart konzipiert, daß je nach der geometrischen Auslegung der Magazineinheit eine sehr hohe Anzahl von CD-Platten zur Einspeicherung gebracht werden können. Die Kompaktheit des CD-Plattengerätes gewährleistet dabei, daß dasselbe innerhalb eines Wohnraumes an einer geeigneten Stelle untergebracht werden kann. Durch die im Rahmen der vorliegenden Erfindung vorgenommene Bewegung der Abtasteinheit entlang der stationär gehaltenen Magazineinheit ergeben sich zwischen den einzelnen Aufnahmefächern der Magazineinheit und der Abtasteinheit sehr kurze Transportwege, was einen äußerst raschen Zugriff zu den jeweils vom Benutzer gewünschten Musikstücken erlaubt. Durch die im Rahmen der vorliegenden Erfindung vorgesehenes CD-Platteneingabe- und -ausgabe kann fernerhin das nachträgliche Einführen weiterer CD-Platten in das CD-Plattengerät sowie ein eventuell gewünschter Austausch gegenüber bereits eingespeicherten CD-Platten in sehr einfacher Weise durchgeführt werden. Im Rahmen der vorgesehenen Fernbedienung läßt sich fernerhin eine automatische Speicherverwaltung der zugeführtwn CD-Platten sowie eine beliebige Abspielprogrammierung erreichen, wodurch der Bedienungskomfort des betreffenden Gerätes wesentlich verbessert wird. Durch die im Rahmen der vorliegenden Erfindung vorgesehene Möglichkeit des Anschlusses eines CD-Rechners oder eines vorprogrammierten Speichermoduls lassen sich Suchvorgänge, Gruppenbildungsvorgänge, sowie Editionsvorgänge in sehr einfacher Weise durchführen, so daß das erfindungsgemäße CD-Plattengerät nicht nur als Heimabspielgerät, sondern ebenfalls als professionelles Abspielgerät beispielsweise in Diskotheken sehr geeignet erscheint.

Die Erfindung soll nunmehr anhand eines Ausführungsbeispiels näher erläutert und beschrieben werden, wobei auf die beigefügte Zeichnung Bezug genommen ist. Es zeigen:

Fig. 1    eine schematische Vorderansicht teilweise im Schnitt des erfindungsgemäßen CD-Plattengerätes,

Fig. 2    eine schematische seitliche Ansicht des CD-Plattengerätes von Fig. 1;

Fig. 3    eine seitliche Ansicht teilweise im Schnitt der mittig angeordneten Abtasteinheit in Verbindung mit der erforderlichen Transfereinheit des CD-Plattengerätes der Fig. 1 und 2;

Fig. 4    eine Stirnansicht der Anordnung von Fig. 3 und

Fig. 5    eine Draufsicht von gewissen Teilen der Anordnung von Fig. 3 und 4.

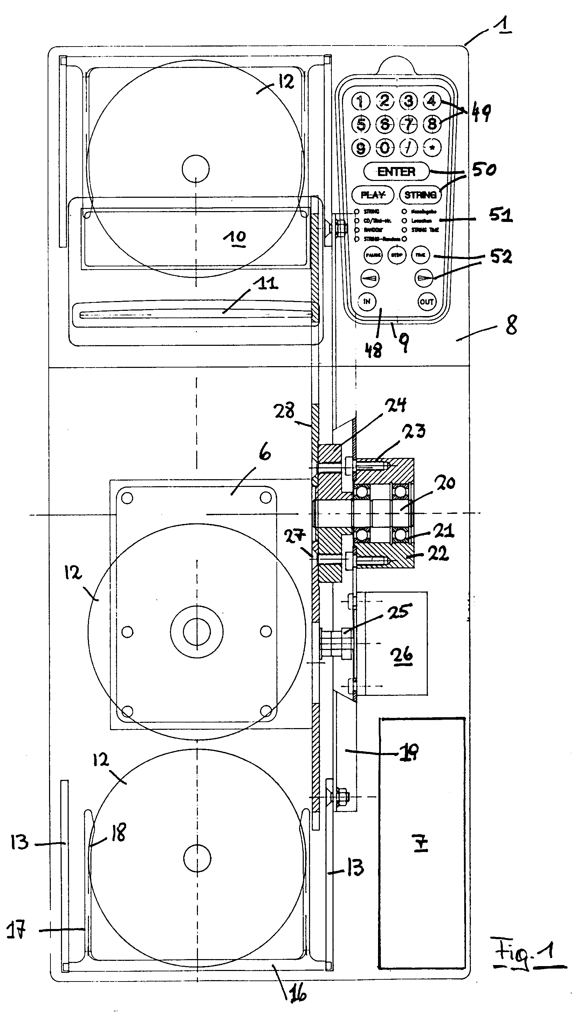

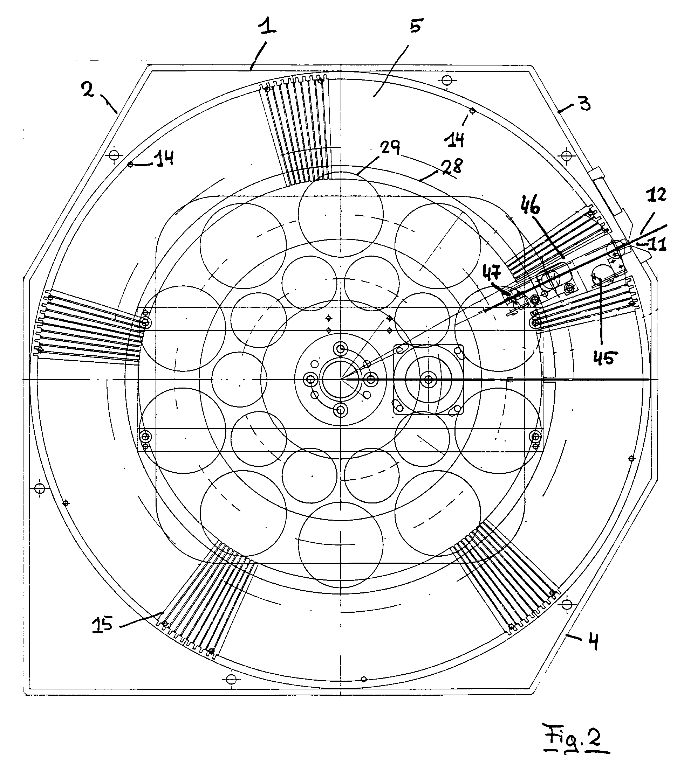

Gemäß Fig. 1 und 2 besitzt das erfindungsgemäße CD-Plattengerät ein in etwa quaderförmiges Gehäuse 1, welches aus optischen Gründen entlang seiner hinteren oberen Kante, seiner vorderen oberen Kante und seiner unteren vorderen Kante Abschrägungen 2 bis 4 aufweist.

Entsprechend Fig. 1 sind innerhalb dieses quaderförmiges Gehäuses 1 ein stationäres ringförmiges Speichermagazin 5, eine in der Mitte des ringförmigen Speichermagazins 5 drehbar gelagerte Abtasteinheit 6 sowie eine rechts unten angeordnete, nur schematisch angedeutete Signalverarbeitungseinheit 7 zur Aufnahme der Geräteelektronik vorgesehen. Das quaderförmige Gehäuse 1 weist in seinem oberen Bereich zusätzlich ein Aufnahmefach 8 auf, in welchem eine Fernbedienungseinheit 9 einsetzbar ist. Seitlich neben dem Aufnahmefach 8 für die Fernbedienungseinheit 9 weist das quaderförmige Gehäuse 1 ein optisches Display 10 sowie darunter einen Schlitz 11 für die Ein- und Abgabe von CD-Platten 12 auf.

Gemäß Fig. 1 und 2 besteht das ringförmige Speichermagazin 5 im wesentlichen aus zwei mit je einer großen quadratischen Durchbrechung versehene Trägerplatten 13, zwischen welchen mittels Zapfen 14 Magazinsegmente 15 gehalten sind. Jedes dieser Magazinsegmente 15 dient dabei der Aufnahme von 52 CD-Platten 12, wobei insgesamt fünf derartige Magazinsegmente 15 vorgesehen sind, welche in ihrer Gesamtheit einen im wesentlichen geschlossenen Kreis bilden. Das ringförmige Speichermagazin 5 mit seinen fünf Magazinsegmenten 15 mit jeweils 52 Aufnahmepositionen kann demzufolge insgesamt der Aufnahme von 260 CD-Platten 12 dienen.

Entsprechend Fig. 1 weisen die zwischen den beiden Trägerplatten 13 gehaltenen Magazinsegmente 15 eine äußere Wandung 16 auf, von welcher beidseitig für jede CD-Platte 12 zwei elastische Haltearme 17 zur Mitte hin ragen. Sowohl die äußere Wandung 16 sowie die elastischen Haltearme 17 sind dabei mit Aufnahmerillen 18 versehen, in welchen der äußere Umfang der jeweiligen CD-Platte 12 zu liegen gelangt. Die einzelnen CD-Platten 12 werden demzufolge jeweils an drei Stellen ihres Umfangs innerhalb der Magazinsegmente 15 gehalten.

Entsprechend Fig. 1 trägt die auf der rechten Seite angeordnete Trägerplatte 13 eine ebenfalls in Fig. 2 erkennbare rechteckige Motorplatte 19. Diese Motorplatte 19 besitzt in ihrem mittigen Bereich eine Bohrung, durch welche eine Welle 20 hindurchgeführt ist. Diese Welle 20 ist mittels zweier Kugellager 21 in einer Buchse 22 gelagert, die mittels Schrauben 23 an der Motorplatte 19 befestigt ist. Die Welle 20 trägt an ihrem freien Ende eine Zahnriemenscheibe 24, welche über einen nicht dargestellten Zahnriemen mit einem Zahnriemenritzel 25 in Eingriff steht. Dieses Zahnriemenritzel 25 bildet dabei Teil eines Schrittmotors 26, welcher exzentrisch auf der Motorplatte 19 befestigt ist. Die Zahnriemenscheibe 24 trägt schließlich noch mittels entsprechender Schrauben 27 einen Drehteller 28, welcher gemäß Fig. 2 zur Gewichtsverringerung mit einer Mehrzahl von gleichmäßig verteilten kreisförmigen Durchbrechungen 29 versehen ist.

Dieser mit Hilfe des Schrittmotors 25 in Drehungen versetzbare Drehteller 28 trägt im wesentlichen drei verschiedene Einheiten.

1. Die bereits in Fig. 1 dargestellte Abtasteinheit 6 mit ihrem Auflageteller 30, auf welchen die jeweils zum Abspielen gelangende CD-Platte 12 zum Aufliegen gelangt. Da diese Abtasteinheit 6 bekannter Bauweise ist und keinen Teil der vorliegenden Erfindung darstellt, erübrigt sich eine nähere Erläuterung dieser Einheit.

2. Ein entlang von zwei Führungstangen 31 verschiebbarer Transferschlitten 32, welcher mit Hilfe eines nicht dargestellten Zahnriemenantriebs und eines Gleichstrommotors entlang der beiden Führungsstangen 31 hin- und herbewegbar ist, und

3. ein Schwenkarm 33, welcher beim Verschieben des Transferschlittens 32 in die äußerste linke Position nach unten gedrückt wird, wodurch ein am Ende des Schwenkarmes 33 gehaltener Magnetandruckteller 34 in Richtung des Auflagetellers 30 der Abtasteinheit 6 geführt wird, so daß auf diese Weise die gewünschte Zentrierung der abzuspielenden CD-Platte 12 zustandekommt.

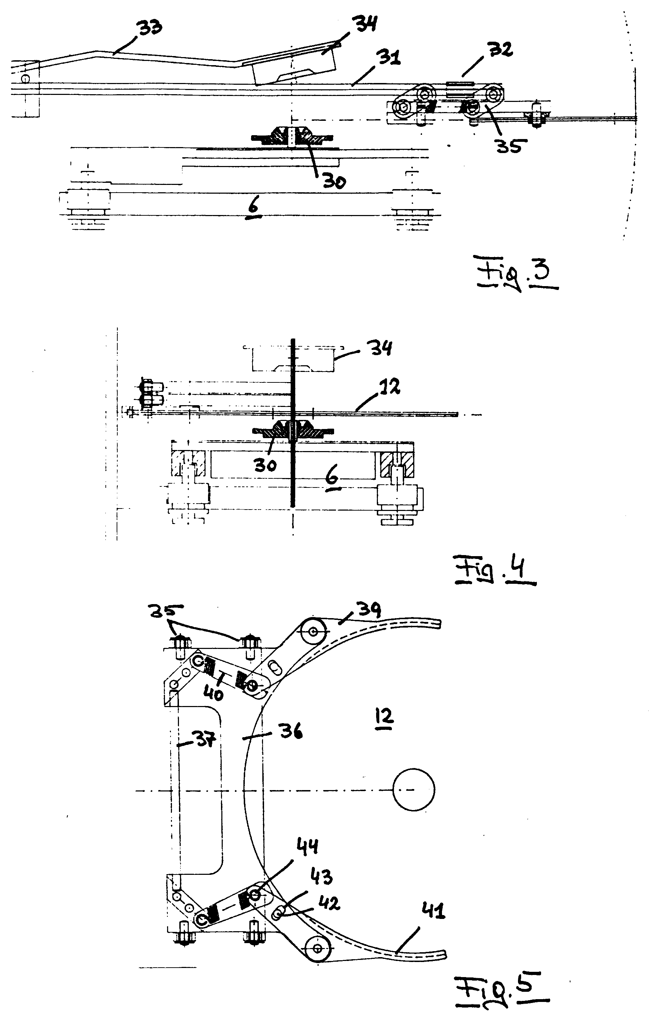

Gemäß Fig. 3 trägt der Transferschlitten 32 nach unten hin mittels einer Parallelogrammaufhängung 35 einen Transferarm 36, welcher gemäß Fig. 5 in seinem rückwärtigen Bereich mit einer Auslösestange 37 versehen ist. Beim Zurückfahren des Transferschlittens 32 entlang der Führungsstangen 31 in die zurückgezogene Position, welche gemäß Fig. 3 der linken Seite entspricht, stößt diese Auslösestange 37 des Transferarmes 36 gegen einen nicht dargestellten Anschlag, wodurch der mittels der Paralellogrammaufhängung 35 aufgehängte Transferarm 36 gegen die Kraft einer nicht dargestellten Zugfeder nach unten gedrückt wird, so daß auf diese Weise eine Absenkung des Transferarmes 36 zustandekommt.

Gemäß Fig. 5 weist der Transferarm 36 zwei gabelförmig auseinanderführende Ansätze 38 auf, an deren Enden zwei Haltefinger 39 schwenkbar gelagert sind. An den nach rückwärts ragenden Enden dieser Haltefinger 39 sind entsprechende Zugfedern 40 eingehängt, welche die freien Enden der Haltefinger 39 gegeneinander drücken. Diese freien Enden der Haltefinger 39 sind mit entsprechenden Rinnen 41 versehen, welche der Erfassung des Außenumfanges einer CD-Platte 12 dienen. Die vorderen Enden dieser Haltefinger 39 sind dabei derart ausgebildet, daß beim Verschieben des Transferschlittens 32 in die gemäß Fig. 3 rechte Position diese freien Enden an entsprechenden Schrägflächen der jeweiligen Haltearme 17 der Magazinsegmente 15 zum Eingriff gelangen, so daß auf diese Weise die betreffenden Haltearme 17 unter Freigabe der jeweiligen CD-Platte 12 nach außen gedrückt werden, während gleichzeitig die schwenkbar an dem Transferarm 36 angelenkten Haltefinger 39 die betreffende CD-Platte 12 erfassen. Der Schwenkbereich der beiden Haltefinger 39 wird dabei mit Hilfe von an dem Transferarm 36 befestigten Zapfen 42 festgelegt, welche in entsprechende Langlochbohrungen 43 der Haltefinger 39 hineinragen. Die an dem rückwärtigen Ende der Haltefinger 39 vorgesehenen, der Einhängung der Zugfedern 40 dienenden Zapfen 44 sind fernerhin nach oben hin verlängert. Die freien Enden dieser Zapfen 44 bilden dabei Anschläge, welche beim Zurückfahren des Transferschlittens 32 entlang der Führungsstangen 31 in die gemäß Fig. 3 linke Position eine gesteuerte Verschwenkung der Haltefinger 39 auslösen, so daß in der Abspielposition der jeweiligen CD-Platte 12 eine Freigabe der freien Enden der Haltefinger 39 gegenüber der betreffenden CD-Platte 12 erfolgt.

Gemäß Fig. 2 ist im Bereich des der Ein- und Ausgabe von CD-Platten 12 dienenden Schlitzes 11 eine mit einem Gleichstrommotor 45 versehene Fördereinheit 46 vorgesehen, mit welcher einzelne CD-Platten 12 jeweils um 60 % des Plattendurchmessers bei der Eingabe eingezogen bzw. bei der Ausgabe nach außen durch den Schlitz 11 hinausbewegt werden. Die Ansteuerung des Gleichstrommotors 45 erfolgt dabei in Abhängigkeit vorgesehener Lichtschranken 47, welche im Bewegungsbereich des durch den Schlitz 11 hindurch bewegten CD-Platte 12 angeordnet sind. Da diese Fördereinheit 6 bekannter Bauweise ist, braucht auf die Einzelheiten derselben nicht näher eingegangen werden.

Die gemäß Fig. 1 in der unteren rechten Ecke angeordnete Signalverarbeitungseinheit 7 enthält neben den Analog- und Digitalkreisen der Abtasteinheit 6 die gesamte Steuerelektronik des CD-Plattengerätes. Diese Steuerelektronik umfaßt dabei einen elektronischen Speicher, welcher unter anderem auch der Verwaltung der Speicherpositionen der CD-Platten 12 innerhalb des ringförmigen Speichermagazins 5 mit seinen 260 Aufnahmepositionen dient. Die Speicherverwaltung erfolgt dabei zum einen mit Hilfe des Schrittmotors 26, von welchem aus dem elektronischen Speicher gemeldet wird, in welche Speicherposition des ringförmigen Speichermagazins 5 jeweils eine neue CD-Platte 12 eingeschoben wird bzw. aus welcher Position heraus eine Entnahme der jeweiligen CD-Platte 12 erfolgt. Eine Sicherheitskontrolle ergibt sich ferner in Verbindung mit einem Sensor, welcher bei dee Rotation des Drehtellers 28 mitbewegt wird, und dabei die Position der von den äußeren Wandungen 16 der Magazinsegmente 15 vorstehenden Haltearme 17 erfaßt. Der betreffende Speicher wird im übrigen über eine vorgesehene Akkuzelle gespeist, so daß auch bei längeren Stromunterbrechungen die in dem elektronischen Speicher eingespeicherten Daten nicht verloren gehen.

Die in dem Aufnahmefach 8 eingesetzte, jedoch beliebig entfernbare Fernbedienungseinheit 9 besitzt ebenfalls eine Akkuzelle, welche im eingesetzten Zustand der Fernbedienungseinheit 9 über entsprechende Kontakte von dem CD-Plattengerät zur Aufladung gelangt. Diese Fernbedienungseinheit 9 ist über eine Infrarotstrecke mit dem CD-Plattengerät verbunden, so daß die Ansteuerung desselben von einer beliebigen Stelle aus vorgenommen werden kann.

Die Fernbedienungseinheit 9 weist eine obere Deckplatte 48 auf, welche mit einer Mehrzahl von Eingabetasten sowie Anzeigelampen versehen ist. Dabei handelt es sich um die folgenden Bedienungselemente:
- Mit den Symbolen "1" bis "0" bezeichnete Eingabetasten 49 für die Eingabe der Speicherposition einer gewünschten CD-Platte 12 sowie daran anschließend der Wahl des auf der betreffenden CD-Platte 12 befindlichen Musikstückes.
- Mit "Enter", "Play" und "String" bezeichnete Eingabetasten 50, mit welchen der Eingabevorgang gesteuert wird, wobei dieser Eingabevorgang entweder unmittelbar für einen Abspielvorgang oder zur Festlegung einer vorprogrammierten Abspielreihenfolge verwendet werden kann. Der innerhalb des Signalverarbeitungseinheit 7 vorgesehene elektronische Speicher ist dabei derart ausgelegt, daß innerhalb desselben maximal 99 verschiedene Abspielprogramme mit jeweils 99 unterschiedlichen Stücken zur Einspeicherung gelangen können. Diese unterschiedlichen Abspielprogramme werden dabei mit "string" bezeichnet, so daß der Zugriff zu diesen Abspielprogrammen durch Drücken der entsprechend gekennzeichneten Taste erfolgt.
- In zwei Reihen angeordnete Anzeigelampen 51, mit welchen jeweils der stattfindende Betriebsmodus angezeigt wird. Die auf der linken Seite vorgesehenen Anzeigelampen 51 zeigen dabei verschiedene Betriebszustände beim Abspielen von Musikstücken an, während die auf der rechten Seite vorgesehenen Anzeigelampen 51 der Anzeige diverser Betriebszustände bei der Programmierung dienen.

- Schließlich sind noch im unteren Bereich der oberen Deckplatte 48 der Fernbedienungseinheit 9 Eingabetasten 52 vorgesehen, welche mit "Pause", "Stopp", "Time", nach links und rechts weisenden Pfeilen sowie "In" und "Out" gekennzeichnet sind. Die mit Pfeilen gekennzeichneten Eingabetasten 52 dienen dabei einer Suchabtastung innerhalb eines vorhandenen Abspielprogramms, während die mit "In" und "Out" gekennzeichneten Eingabetasten 52 der gewünschten Ein- und Ausgabe von CD-Platten 12 in und aus dem ringförmigen Speichermagazin 5 dienen.

Das CD-Plattengerät ist mit einer seriellen Standardschnittstelle des Typs RS232 versehen, über welche ein Anschluß an einen PC-Rechner oder einen vorprogrammierten Speichermodul möglich ist. Bei Verwendung eines PC-Rechners kann über die Tastatur eine Eingabe der Titelinformation der innerhalb des CD-Plattengerätes eingespeicherten CD-Platten 12 vorgenommen werden, so daß auf diese Weise mit Hilfe des PC-Rechners Suchvorgänge, Gruppenbildungsvorgänge, Editionsvorgänge und dgl. aus vorgenommen werden können. Bei Anschluß des PC-Rechners an das CD-Plattengerät kann die Wahl von dem CD-Plattengerät abzuspielender Musikstücke von dem PC-Rechner aus erfolgen, indem auf dem Bildschirm des PC-Rechners bestimmte nach gewissen Kriterien ausgesuchte Musikstücke zur Auflistung gelangen, worauf mit Hilfe der Maus das gewünschte Musikstück ausgesucht und durch Aktivierung einer entsprechenden Taste zum Abspielen gebracht wird. Die Bedienung des CD-Plattengerätes wird in diesem Fall vollkommen in den Bereich des PC-Rechners verlegt, so daß auf diese Weise der PC-Rechner als Steuereinheit für das CD-Plattengerät wirkt. Die innerhalb der Signalverarbeitungseinheit 7 vorgesehene Elektronik ist dabei derart ausgelegt, daß maximal neun CD-Plattengeräte von einem einzigen PC-Rechner aus angesteuert werden können, so daß eine derartige Anlage in Verbindung mit einer PC-Rechner insbesondere für den Einsatz in Diskotheken sehr geeignet erscheint. Auf diese Weise läßt sich nämlich ein vollautomatischer Zugriff zu mehreren tausend CD-Platten 12 erreichen, ohne daß dabei einzelne CD-Platten 12 manuell gehandhabt müssen.

Das erfindungsgemäße CD-Plattengerät ist zusätzlich mit einem Karteikasten oder einem Karteibuch versehen, in welchem die Deckcover der in dem Speichermagazin 5 eingespeicherten CD-Platten 12 zur Aufbewahrung gelangen. Diese Deckcover, welche beim Vertrieb von CD-Platten 12 in den Plattenkasetten eingelegt sind, enthalten bekanntlich die Grundinformation der aufgezeichneten Musikstücke zusammen mit der jeweiligen Abspieldauer. Beim Einführen jeweils neu erstandener CD-Platten 12 in dem der Ein- und Ausgabe dienenden Schlitz 11 sollte die jeweils auf dem optischen Display 10 angezeigte Speicherposition manuell auf dem dazugehörigen Deckcover eingetragen werden, so daß anhand des vorgesehenen Karteikastens bzw. Karteibuches die jeweilige Speicherposition innerhalb des Speichermagazins 5 sehr schnell ermittelt werden kann.

Die Funktionsweise des erfindungsgemäßen CD-Plattengerätes soll nunmehr im Fall eines einfachen Abspielvorgangs kurz erläutert werden: Falls anhand des vorhandenen Karteikastens oder des Karteibuches festgestellt wird, daß ein gewünschtes Musikstück das dritte Stück auf jener CD-Platte 12 ist, welches sich in der Speicherposition 125 des ringförmigen Speihermagazins 5 befindet, dann müssen auf der oberen Deckplatte 48 der Fernbedienungseinheit 9 zuerst die Eingabetasten 49 betätigt werden, welche mit den Symbolen "1", "2", "5", "/" und "3" bezeichnet sind. In der Folge muß dann die mit "Enter" bezeichnete Eingabetaste 50 bedient werden, worauf schließlich die mit "Play" bezeichnete Eingabetaste 50 niedergedrückt werden muß. Auf Grund der Betätigung dieser Eingabetasten 49 und 50 wird die innerhalb der Signalverarbeitungseinheiten 7 vorhandene Steuerelektronik derart aktiviert, daß der Schrittmotor 26 den Drehteller 28 in eine Position fährt, welche der Speicherposition 125 des ringförmigen Speichermagazins 5 entspricht. Der entlang der beiden Führungsstangen 31 verschiebbare Transferschlitten 32 mit seinem Transferarm 36 wird dabei gemäß Fig. 3 so weit nach rechts bewegt, bis die in Fig. 5 dargestellten freien Enden der Haltefinger 39 die innerhalb der Speicherposition 125 befindliche CD-Platte 12 an ihrem Außenumfang erfassen, während gleichzeitig die betreffenden Haltearme 17 des jeweiligen Magazinsegmentes 15 aufgespreizt werden, so daß eine Freigabe der jeweiligen CD-Platte 12 aus dem Speichermagazin 5 erfolgt. In der Folge wird der Transferschlitten 32 gemäß Fig. 3 so weit nach links bewegt, bis der Mittelpunkt der betreffenden CD-Platte 12 oberhalb der Achse des Auflagetellers 30 der Abtasteinheit 6 zu liegen gelangt. Durch Berührung der an dem Transferarm 36 vorgesehenen Auslösestange 37 an einem nicht dargestellten Anschlag wird der mittels der Parallelogrammaufhängung 35 an dem Transferschlitten 32 aufgehängte Transferarm 36 gegen die Kraft einer nicht dargestellten Zugfeder nach unten gedrückt, so daß wunschgemäß eine Absenkung der mitgeführten CD-Platte 12 auf dem Auflageteller 30 der Abtasteinheit 6 erfolgt. Die im rückwärtigen Bereich der Haltefinger 39 vorgesehenen Zapfen 44 werden durch Eingriff an einem Anschlag gegen die Kraft der Zugfedern 40 zusätzlich zusammengedrückt, so daß auf diese Weise eine Freigabe der in den Rinnen 41 der Haltefinger 39 gehaltenen CD-Platte 12 erfolgt. Schließlich wird noch mit Hilfe eines weiteren Anschlages der Schwenkarm 33 nach unten geschwenkt, so daß der am Ende des Schwenkarmes 33 vorgesehene Magnetandruckteller 34 bei gleichzeitiger Zentrierung der CD-Platte 12 auf dem Auflageteller 30 der Abtasteinheit 6 zu liegen gelangt. Mit Hilfe der innerhalb der Signalverarbeitungseinheit 7 vorhandenen Steuerelektronik wird in der Folge der Schrittmotor 26 erneut aktiviert, wodurch die Abtasteinheit 6 in eine horizontale Position gefahren wird, so daß in dieser Position eine Abtastung der betreffenden CD-Platte 12 vorgenommen wird. Die Abtasteinheit 6 wird dabei von der Steuerelektronik derart angesteuert, daß wunschgemäß das auf der CD-Platte 12 befindliche dritte Musikstück zur Abtastung gelangt. Nach Beendigung der Abtastung dieses auf der CD-Platte 12 befindlichen Musikstückes erfolgt dann ein Rücktransport der CD-Platte 12 zurück in die Speicherposition 112, aus welcher zuvor die CD-Platte 12 entnommemn worden war. Diese Rückführung erfolgt dabei in entsprechender Weise, in welcher zuvor die Entnahme aus dem Speichermagazin 5 vorgenommen wurde.

Im Fall der Verwendung eines Abspielprogrammes erfolgt die Bewegung der verschiedenen CD-Platten 12 in entsprechender Weise, wobei jedoch festzustellen ist, daß in diesem Fall die Steuerung des CD-Plattengerätes vollautomatisch entsprechend der gewählten Vorprogrammierung durchgeführt wird.

Es ist einleuchtend, daß im Rahmen der vorliegenden Erfindung verschiedene Abwandlungen möglich sind. So besteht beispielsweise die Möglichkeit, daß mehrere jeweils paarweise vorgesehene Magazintürme vorgesehen sind, zwischen welchen die vorhandene Abtasteinheit in vertikaler Richtung auf- und abwärts bewegt wird, so daß auf diese Weise bei kompakter Bauweise ebenfalls sehr kurze Zugriffzeiten erzielbar sind.

**Patentansprüche**

1. CD-Plattengerät zur Speicherung und Abtastung einer Vielzahl von CD-Platten, bestehend aus einem äußeren Gehäuse, einem Speichermagazin mit einer Mehrzahl von Aufnahmefächern, in welchen die CD-Platten einzeln einsetzbar sind, einer Abtasteinheit, in welcher die auf einer CD-Platte in digitaler Form aufgezeichnete Information unter Einsatz eines Laserstrahls abtastbar ist, sowie einer Transfereinheit, mit welcher die innerhalb eines bestimmten Aufnahmefaches des Speichermagazins befindliche CD-Platte der Abtasteinheit zuführbar ist,

dadurch **gekennzeichnet**, daß bei stationärer Ausbildung des Speichermagazin (5) die Abtasteinheit (6) in Bezug auf das Speichermagazin (5) beweglich ausgebildet ist.

2. CD-Plattengerät nach Anspruch 1, dadurch gekennzeichnet, daß das Speichermagazin (5) in Form von wenigstens zwei vertikalen Magazintürmen ausgebildet ist, zwischen welchen die Abtasteinheit (6) in vertikaler Richtung translatorisch bewegbar ist.

3. CD-Plattengerät nach Anspruch 1, dadurch gekennzeichnet, daß das Speichermagazin (5) in Form eines Torusringes ausgebildet ist, in dessem mittleren Bereich die Abtasteinheit (6) verschwenkbar gelagert ist.

4. CD-Plattengerät nach Anspruch 3, dadurch gekennzeichnet, daß das ringförmige Speichermagazin im wesentlichen aus zwei Trägerplatten (13) besteht, zwischen welchen einzelne Magazinsegmente (15) mit Hilfe von Zapfen (14) festklemmbar sind.

5. CD-Plattengerät nach Anspruch 4, dadurch gekennzeichnet, daß die einzelnen Magazinsegmente (15) jeweils eine äußere Wandung (16) aufweisen, von welcher aus elastische Haltearme (17) zur Mitte hin ragen, wobei sowohl die äußeren Wandungen (16) als auch die davon vorspringenden Haltearme (17) jeweils nach innen hin Aufnahmerillen (18) aufweisen, welche der Halterung einzelner CD-Platten (12) an drei Stellen ihres Umfanges dienen.

6. CD-Plattengerät nach Anspruch 4 oder 5, dadurch gekennzeichnet, daß an der einen Trägerplatte (13) eine Motorplatte (19) befestigt ist, welche neben einem exzentrisch angeordneten Schrittmotor (26) der Lagerung einer Welle (20) dient, und daß diese Welle (20) eine von dem Schrittmotor (26) über einen Zahnriemen angetriebene Zahnriemenscheibe (24) trägt, auf welcher ein mit kreisförmigen Durchbrechungen (29) versehener Auflageteller (30) befestigt ist.

7. CD-Plattengerät nach Anspruch 6, dadurch gekennzeichnet, daß der Auflageteller (30) neben der Abtasteinheit (6) zusätzlich zwei Führungsstangen (31) trägt, entlang welcher ein Transferschlitten (32) bewegbar ist, an dem unter Einsatz einer Parallelogrammaufhängung (36) ein mit zwei schwenkbaren Haltefingern (39) versehener Transferarm (36) aufgehängt ist, und daß die freien Enden der beiden Haltefinger (39) mit Rinnen (41) versehen sind, in welchen die zu transferierenden CD-Platten (12) an zwei Stellen ihres Außenumfanges gehalten werden.

8. CD-Plattengerät nach Anspruch 7, dadurch gekennzeichnet, daß der Drehteller (28) zusätzlich einen Schwenkarm (33) trägt, dessen freies Ende der Halterung eines Magnetandrucktellers (34) dient.

9. CD-Plattengerät nach einem der Ansprüche 3 bis 8, dadurch gekennzeichnet, daß im oberen Bereich des in etwa quaderförmigen Gehäuses (1) ein der Eingabe- und Entnahme von CD-Platten (12) dienender Schlitz (11) vorgesehen ist, in dessen Bereich eine mit einem Gleichstrommotor (45) versehene Fördereinheit (46) vorgesehen ist, mit welcher in Abhängigkeit einer Steuerung mittels Lichtschranken (47) eine Förderung von CD-Platten (12) in das Gerät oder aus demselben erfolgt.

10. CD-Plattengerät nach einem der vorhergehenden Ansprüche, dadurch gekennzeichnet, daß im oberen Bereich des quaderförmigen Gehäuses (1) zusätzlich ein optisches Display (10) sowie ein Aufnahmefach (8) zur Aufnahme einer infrarotbetriebenen Fernbedienungseinheit (9) vorgesehen sind, während im unteren Bereich des quaderförmigen Gehäuses (1) eine Signalverarbeitungseinheit (7) vorgesehen ist, von welcher aus die gesamte Signalverarbeitung sowie Ansteuerung des CD-Plattengerätes erfolgt.

11. CD-Plattengerät nach Anspruch 10, dadurch gekennzeichnet, daß die Signalverarbeitungseinheit (7) mit einem elektronischen Speicher versehen ist, mit welchem neben einer automatischen Speicherverwaltung der bereits besetzten Speicherplätze des Speichermagazins (5) zusätzlich eine beliebige Abspielprogrammierung in Verbindung mit der Fernbedienungseinheit (9) durchführbar ist.

12. CD-Plattengerät nach Anspruch 11, dadurch gekennzeichnet, daß zusätzlich ein Karteikasten und/oder ein Karteibuch vorgesehen sind, in welchem jeweils die Deckcover der Kasetten von CD-Platten (12) mit Angabe der verschiedenen Nusikstücke und deren Abspieldauer einsetzbar sind, wobei auf diesen Deckcover manuell die jeweilige Speicherposition in dem Speichermagazin (5) eintragbar ist.

13. CD-Plattengerät nach einem der Ansprüche 10 bis 12, dadurch gekennzeichnet, daß die Signalverarbeitungseinheit (7) zusätzlich mit einer äußeren Schnittstelle, vorzugsweise des seriellen Typs RS 232 versehen ist, an welche wahlweise ein für Suchvorgänge nach bestimmten Musikstücken und anderen Kriterien programmierbarer PC-Rechner und/oder ein vorprogrammierter Speichermodul anschließbar ist.

14. CD-Plattengerät nach Anspruch 13, dadurch gekennzeichnet, daß die Signalverarbeitungseinheit (7) in Verbindung mit der externen Schnittstelle derart ausgebildet ist, daß mehrere CD-Plattengeräte unter Bildung einer gemeinsam ansteuerbaren Gerätegruppe an einem einzelnen PC-Rechner anschließbar sind.

Fig. 1

Fig.2

Fig. 3

Fig. 4

Fig. 5